# EUROPÄISCHE PATENTANMELDUNG

(11) **EP 2 360 412 A2**
(43) Veröffentlichungstag der Anmeldung: **24.08.2011**
(21) Anmeldenummer: 11154613.1
(22) Anmeldetag: 16.02.2011
(51) Int. Cl.: F16L 37/092, F16L 47/12

(54) **Steckfitting für ein Rohr**

(30) Priorität: 16.02.2010 DE 202010002385 U
(71) Anmelder: Uponor Innovation AB, 51381 Fristad (SE)
(72) Erfinder: Beckmann, Stefan, 46414, Rhede (DE); Rippstein, Klaus, 97500, Ebelsbach (DE)
(74) Vertreter: Epping, Wilhelm

(57) **Zusammenfassung**

Ein Steckfitting für ein Rohr, insbesondere Kunststoff- oder Kunststoff-Metall-Verbundrohr, umfasst einen Stützkörper (11) mit einer Stützhülse (17), mit einer am Stützkörper (11) geführten und die Stützhülse (17) umgebenden Steckhülse (40) mit einer sich in Richtung des freien Endes (18a) aufweitenden Innenwand (43), die mindestens eine Öffnung (41) aufweist, mindestens ein zwischen Steckhülse (40) und Stützhülse (17) angeordneten und axial zur Stützhülse (17) bewegbaren Klemmelement (30), das mindestens eine Rückstellhalterung (32) aufweist, die ausgebildet ist, in die mindestens eine Öffnung (41) der Innenwand (43) der Steckhülse (40) einzugreifen, wobei das mindestens eine Klemmelement (30) eine innere Auflagefläche (38), die der Stützhülse (17) zugewandt ist, und eine äußere, sich in Richtung des freien Endes (18a) der Stützhülse (17) aufweitende, Auflagefläche (35), die der Stützhülse (17) abgewandt ist, aufweist, so dass das mindestens eine Klemmelement (30) und die Steckhülse (40) zur axialen Fixierung des Rohres (20) auf der Stützhülse (17) zusammenwirken.

## Beschreibung

Die Erfindung betrifft einen Steckfitting für ein Rohr, insbesondere für ein Kunststoffrohr oder ein Rohr aus einem Kunststoff-/Metallverbundwerkstoff.

Rohranschlussfittingsysteme sind in unterschiedlichsten Ausgestaltungen bekannt. So zum Beispiel weisen Pressfittings für Rohre im Allgemeinen einen Fittingkörper auf, der mit einer Stützhülse versehen ist, auf die das Ende eines anzuschließenden Rohres aufgeschoben wird. Die Stützhülse und das auf diese aufgeschobene Rohrende sind dabei von einer plastisch verformbaren Presshülse umgeben, die mittels eines Presswerkzeuges radial gestaucht und damit gegen das Rohr gedrückt wird, so dass dieses am Pressfitting sowohl dicht anliegt als auch fixiert ist. Derartige Pressfittings sind in den Druckschriften DE 10 2005 028558 B3 und DE 10 137 078 B8 beschrieben.

Auch Fittings sind bekannt, die ohne Zuhilfenahme eines Presswerkzeugs die Montage eines Rohres auf dem Fittingkörper erlauben. So umfasst der Fitting aus der Druckschrift EP 0 264 587 B1 ein Anschlussteil verbunden mit einem Innengewinde und einer Stützhülse, auf die ein Rohr über ein freies Ende der Stützhülse aufschiebbar ist. Radial um das Rohr ist eine Klemmhülse angeordnet, mit einer sich in Richtung des freien Endes der Stützhülse aufweitenden Außenwand, die unter Formschluss dem Anschlussteil anliegt. Eine Überwurfmutter ist dazu ausgebildet, auf der Fitting aufgeschraubt zu werden und mit ihrem Bund die Klemmhülse radial zusammenzudrücken. Diese wird auf Grund der aufweitenden Außenwand zunehmend auf das Rohr gedrückt.

Das Dokument EP 1 150 056 B1 zeigt einen Steckfitting für ein Kunststoffrohr mit einer das Anschlussende des Kunststoffrohrs aufnehmenden Hülse, in der ein mit einem Gegenkonus zusammenwirkender, axial verschiebbarer, konischer Klemmring vorgesehen ist, der auf der dem Gegenkonus abgekehrten Ringseite gegen die Rohrwandung vorstehende, widerhakenartige Rückhaltekrallen für das Anschlussende des Kunststoffrohrs aufweist. Diese Krallen können aber zu einer Beschädigung des Rohres führen.

Demnach bleibt das Bedürfnis, eine einfache, zuverlässige und rohrschonende Montage eines Rohres auf einen Fitting zu ermöglichen.

Zur Lösung dieser Aufgabe wird ein Steckfitting gemäß des Anspruchs 1 vorgeschlagen. Weitere Ausgestaltungen sind Gegenstand der Unteransprüche.

Der erfindungsgemäße Steckfitting für ein Rohr, insbesondere Kunststoff- oder Kunststoff-Metall-Verbundrohr, umfasst einen Stützkörper, von dem eine Stützhülse mit einem freien Ende absteht. Auf die Stützhülse ist über ihr freies Ende hinweg ein Rohr aufschiebbar. Am Stützkörper ist eine Steckhülse geführt, die die Stützhülse radial umgibt und die mit einer sich in Richtung des freien Endes aufweitenden Innenwand ausgestaltet ist. Die Steckhülse weist an ihrer Innenwand mindestens eine Öffnung beziehungsweise Vertiefung auf.

Zwischen Steckhülse und Stützhülse ist wenigstens ein axial zur Stützhülse bewegbares Klemmelement, beispielsweise ein

Klemmring angeordnet, wobei das Klemmelement oder der -Ring mindestens eine Rückstellhalterung umfasst. Die Rückstellhalterung ist dazu ausgebildet, in die, mindestens eine, Öffnung beziehungsweise Vertiefung der Innenwand der Steckhülse einzugreifen. Das mindestens eine Klemmelement weist eine innere Auflagefläche auf, die der Stützhülse zugewandt ist, sowie eine äußere Auflagefläche, die sich in Richtung des freien Endes der Stützhülse aufweitet und die der Stützhülse abgewandt ist. In dieser Ausführung kann ein Rohr mit Hilfe des Klemmelements auf der Stützhülse und damit an dem Fitting fixiert werden.

Das mindestens eine Klemmelement ist ausgebildet, von einem ersten Zustand, bei dem die mindestens eine Rückstellhalterung außerhalb der mindestens einen Öffnung angeordnet ist, in einen zweiten Zustand, bei dem die mindestens eine Rückstellhalterung in die mindestens eine Öffnung eingreift, verschoben zu werden und somit im zweiten Zustand in Zusammenwirkung mit der Steckhülse das Rohr auf der Stützhülse zu fixieren.

Sowohl Steckhülse als auch Klemmelement besitzen schräg zur Stützhülse verlaufende Wände beziehungsweise Oberflächen. Die Aufweitung der Innenwand der Steckhülse zum freien Ende der Stützhülse hin kann konisch, teilweise konisch oder aber gekrümmt ausgebildet sein. Des Weiteren weitet sich die äußere Auflagefläche des Klemmelements unter Formschluss mit der Innenwand der Steckhülse auf. Somit kann die Aufweitung der äußeren Auflagefläche des Klemmelements ebenfalls konisch, teilweise konisch oder gekrümmt ausgebildet sein.

Bei einem Aufschieben des Rohres oder eines Schlauches auf die Stützhülse wird schließlich das mindestens eine Klemmelement zusammen mit dem Rohr auf die Stützhülse geschoben. Da sich die äußere Auflagefläche des Klemmelements und die Innenwand der Steckhülse in Schubrichtung verjüngen, wird das Klemmelement zunehmend auf das Rohr gedrückt und das Rohr auf Grund der Reibung zwischen Klemmelement und Rohr im Fitting fixiert. Bei dem Aufschieben des Rohres oder Schlauches auf die Stützhülse werden somit Axialkräfte von Steckhülse und Klemmring in Radialkräfte umgelenkt.

Das Rohr weist also durch die oben beschriebene Reibschlussverbindung eine unbeschädigte beziehungsweise gleichmäßig verformte Oberfläche auf, die eine hohe Stabilität ermöglicht. Eine Beschädigung des Rohres zum Beispiel durch Haltekrallen wird dabei vermieden. Außerdem werden häufig Anforderungen an die Verbindungstechnologie gestellt, die eine Mindest- und eine Maximalrohrhaltekraft beschreiben. Mit Hilfe einer solchen Reibschlussverbindung lässt sich, ohne das Rohr zu beschädigen, eine solche Kraft einstellen. Des Weiteren ist eine derartige Montage eines Rohres auf den Fitting von Vorteil, da kein zusätzliches Werkzeug zum Verpressen des Fittings nötig ist. Es ist lediglich Handkraft zur Montage des erfindungsgemäßen Steckfittings aufzuwenden.

Auch eine Demontage des Rohres ist bei dem genannten Steckfitting möglich. Es kann hierfür ein Werkzeug verwendet werden, das die Rückstellhalterungen aus den Öffnungen entfernt und somit das Rohr und der Klemmring axial von der Stützhülse schiebbar sind.

Ferner ist es möglich jene Technologie mit allen gängigen Stützkörpern zu kombinieren.

Eine andere Ausführungsform des Steckfittings umfasst einen Stützkörper, der eine Stützhülse mit einem freien Ende aufweist. Die Stützhülse bildet mit ihrer Oberfläche eine im Wesentlichen zylindrische Außenanschlussfläche, auf die ein Kunststoffrohr aufschiebbar ist. An der Stützhülse ist eine Steckhülse gelagert, die die Stützhülse radial umgibt. Des Weiteren weist die Steckhülse eine sich in Richtung des freien Endes aufweitende Innenwand auf. Die Aufweitung der Innenwand endet mit einem geraden Endstück. Dabei bilden die Steckhülse mit ihrer aufweitenden Innenwand und die Stützhülse einen Ringspalt aus, in den das Rohr einfügbar ist. Das Rohr ist demnach auf die Außenanschlussfläche der Stützhülse, in den Ringspalt schiebbar.

Die Steckhülse weist in einer weiteren Ausführung mindestens eine Öffnung zwischen der aufweitenden Innenwand und dem Endstück und die mindestens eine Öffnung eine äußere Öffnungswand angrenzend zum Endstück auf.

In den Ringspalt ist ein oder mehrere Klemmelemente zwischen die Steckhülse und dem anzuschließenden Rohr einfügbar. Jedes Klemmelement umfasst mindestens eine Rückstellhalterung, die dazu ausgebildet ist, in die mindestens eine Öffnung der Steckhülse einzugreifen. Durch dieses Eingreifen wird das Klemmelement axial in der Steckhülse fixiert. Hierbei drückt die Rückstellhalterung mit einer Rückwand gegen die äußere Öffnungswand der mindestens einen Öffnung.

Des Klemmelement hat weiterhin eine äußere Auflagefläche, die sich unter Formschluss mit der aufweitenden Innenwand der Steckhülse aufweitet, und eine innere Auflagefläche, die dazu ausgebildet ist, mit der Steckhülse zur Fixierung des Rohres auf der Stützhülse zusammenzuwirken, sobald das Rohr aufgeschoben ist und die Rückstellhalterung des Klemmrings in die Öffnung der Steckhülse eingreift.

In einer weiteren Ausführungsform des erfindungsgemäßen Steckfittings kann die Außenanschlussfläche der Stützhülse gegebenenfalls mit einer in Umfangsrichtung verlaufenden Profilierung versehen sein. Diese kann in axialer Richtung der Stützhülse sowohl wellen- als auch sägezahnförmig ausgebildet sein, wobei die Sägezähne eine gekrümmte Oberfläche, die dem freien Ende der Stützhülse abgewandt ist, und eine abrupt abfallende, normal auf die Außenanschlussfläche stehende gerade Wand aufweisen, die dem freien Ende der Stützhülse zugewandt ist. Mit dem Profil wird das Rohr besser auf der Stützhülse gehalten.

Zwischen der Profilierung können auch eine oder mehrere Aufnahmenuten in die Außenanschlussfläche der Stützhülse eingelassen sein, die zur Aufnahme eines Dichtrings ausgebildet sind. Diese Dichtringe können gummielastisch, beispielsweise O-Ringe, sein und dienen zum dichten Anliegen zwischen Stützhülse und aufzuschiebenden Rohr. Die Dichtringe können vormontiert sein.

Eine weitere Ausführungsform des Steckfittings für ein Rohr, insbesondere Kunststoff- oder Kunststoff-Metall-Verbundrohr, weist das mindestens eine Klemmelement, beispielsweise in Form eines einzelnen Klemmring eine Mitnahmevorrichtung auf, die beispielsweise an einer, der mindestens einen Rückstellhalterung gegenüberliegenden, Seite angeordnet und dazu ausgebildet ist, beim Aufschieben des Rohres über das freie Ende der Stützhülse das Klemmelement mitzuziehen. Die Mitnahmevorrichtung hakt sich dabei beim Aufschieben des Rohres an dessen vorderen Ende ein und somit werden das mindestens eine Klemmelement und Rohr gemeinsam auf die Stützhülse geschoben. Die Mitnahmevorrichtung kann dabei eine vorgegebene Form behalten. Alternativ kann die Mitnahmevorrichtung auch in einem Bereich zwischen den beiden Endflächen des mindestens einen Klemmelementes angeordnet sein. Das Rohr kann beispielsweise eine Vertiefung oder ähnliches aufweisen, in das die Mitnahmevorrichtung eingreift und so das Klemmelement beim Einschieben des Rohres mitbewegt wird.

In einer weiteren Ausführungsform des Fittings ist auf die Stützhülse eine Steckhülse aufsteckbar und mit einem Schnappverschluss gegen eine unbeabsichtigte Ablösung gesichert. Der Schnappverschluss kann aus einer Führungsnut auf der Stützhülse und einem dazu korrespondierenden Führungselement auf der Steckhülse gebildet sein. Die Führungsnut ist eine in Umfangsrichtung der Stützhülse verlaufende Vertiefung, die zwischen freiem Ende und Stützkörper angeordnet ist. Des Weiteren wird die Führungsnut vom Stützkörper und einem Führungsvorsprung, der an der dem Stützkörper gegenüberliegenden Seite der Führungsnut angeordnet ist, begrenzt. Das Führungselement ist ein in Umfangsrichtung der Innenwand der Steckhülse verlaufender, zur Stützhülse gerichteter Vorsprung beziehungsweise Wulst der Innenwand. Die Steckhülse kann auf der Stützhülse vormontiert sein. Führungsnut und Führungselement auf der Stützhülse bzw. der Steckhülse können auch vertauscht sein.

Auch das, beispielsweise durch Spritzgießen hergestellte, mindestens eine Klemmelement, kann zwischen Stützhülse und Steckhülse vormontiert sein. Dabei ist das mindestens eine Klemmelement axial verschiebbar gelagert und teilweise verformbar. Das Klemmelement kann größtenteils inkompressibles Material umfassen.

Die Sicherung des mindestens einen Klemmelements gegen ein Herausrutschen aus der Steckhülse kann durch einen kleinen Klemmsockel verbessert werden. Der Klemmsockel ist zwischen der Mitnahmevorrichtung und der Rückstellhalterung an der äußeren Auflagefläche des Klemmelements, außerdem axial parallel zur Rückstellhalterung, angeordnet. Der kleine Klemmsockel ist dazu ausgebildet, wenn das Rohr noch außerhalb des Ringspalts und die Rückstellhalterung somit auch noch außerhalb der Öffnung angeordnet sind, in die Öffnung einzugreifen. Dabei wird das Klemmelement im Ringspalt an der Steckhülse vorübergehend fixiert, bis das Rohr gemeinsam mit dem Klemmelement auf die Stützhülse aufgeschoben wird. Dann löst sich der kleine Klemmsockel von der äußeren Öffnungswand der Öffnung.

In einer Ausgestaltung des oben genannten kleinen Klemmsockels weist dieser kompressibles Material auf, so dass er beim Aufschieben des Klemmelements auf die Stützhülse an der Innenwand der Steckhülse entlang gleitet und dabei von der Innenwand der Steckhülse zusammengedrückt wird. Eine Verformung des Klemmsockels ist hierbei als Stauchung ausführbar. Der Klemmsockel hat gleichzeitig genügend Stabilität, beim Eingreifen in die Öffnung das mindestens eine Klemmelement axial an der Steckhülse zu sichern.

In einer Weiterbildung der Erfindung weist die Steckhülse an der Innenwand einen mindestens einen Einführungsschlitz auf, so dass der kleine Klemmsockel des mindestens einen Klemmelements, während des Aufschiebens des Rohres zusammen mit dem Klemmelement, in den Einführungsschlitz eingeführt wird. Der kleine Klemmsockel kann in dieser Weiterbildung größtenteils aus inkompressiblem Material sein und seine Form behalten. Somit kann durch das Einführen des kleinen Klemmsockels in den Einführungsschlitz der Steckhülse ein durch den kleinen Klemmsockel gegebenenfalls verursachter Widerstand während des Montierens des Rohres verringert werden.

In einer Ausführung der Erfindung ist die Reibung zwischen äußerer Auflagefläche des oder der Klemmelemente und Innenwand der Steckhülse klein gehalten, so dass das mindestens eine Klemmelement beim Aufschieben des Rohres nur eine kleine Reibung überwinden muss. Andererseits ist die Reibung zwischen innerer Auflagefläche des Klemmelements und Rohr groß gehalten, damit, sobald die Montage vollzogen ist, das Rohr gegen axiales Herausziehen aus dem Ringspalt gesichert ist. Insbesondere kann die Reibung zwischen Klemmelement und Steckhülse kleiner sein als zwischen Rohr und Klemmelement.

Ein weiteres Ausführungsbeispiel des Fittings weist mindestens ein Klemmelement mit einer separaten beziehungsweise integrierten Reib-/Haftschicht an dessen innerer Auflagefläche auf, so dass der Reibwert zwischen Rohr und Klemmelement zusätzlich erhöht wird.

Die Montage des Rohres erfolgt derart, dass, sobald das Rohr vollständig auf das freie Ende der Stützhülse aufgeschoben ist, das mindestens eine Klemmelement mit Hilfe eines Schnappverschlusses verriegelt. Der Schnappverschluss umfasst die Rückstellhalterung und die Öffnung. Wenn der Schnappverschluss verriegelt, greift die Rückstellhalterung in die Öffnung ein. Durch die Kraft, die nun auf das Rohr wirkt, ist dieses fixiert und gegen Herausziehen gesichert.

Hierzu sind in einem Ausführungsbeispiel mehrere Öffnungen in der Steckhülse ausgespart. Dabei können die Öffnungen symmetrisch entlang eines Umfangs der Steckhülse angeordnet sein. Die Öffnungen nehmen beispielsweise in ihrer Ausdehnung insgesamt ungefähr 30 % des Umfangs der Steckhülse ein. Die Ausdehnung der Öffnungen kann geringer als 50 % des Umfangs der Steckhülse sein, damit die Stabilität der Steckhülse hoch ist.

Falls mehrere Öffnungen ausgebildet sind, können diese an der Steckhülse konzentrisch und mit gleichen Abständen zueinander am Umfang der Steckhülse angeordnet sein.

Zum Beispiel können in einer Ausführungsform drei Öffnungen ausgebildet sein mit jeweils einer Ausdehnung von ungefähr 10 % des Umfangs der Steckhülse. Hierbei können die drei Öffnungen an der Steckhülse in Umfangsrichtung in einem Winkel von 120° zueinander angeordnet sein.

Die Öffnungen sollten zumindest teilweise über der Stützhülse liegen.

Des Weiteren kann das Klemmelement, beispielsweise in Form eines Klemmrings zu jeder Öffnung eine Rückstellhalterung auf, die zur axialen Sicherung des Klemmelements in die Öffnung eingreift. Diese Rückstellhalterungen können somit ebenfalls konzentrisch und mit gleichen Abständen zueinander in Umfangsrichtung des Klemmelements angeordnet sein. Insbesondere können vollständig montierte Klemmelemente die Rückstellhalterungen an einer, dem freien Ende der Stützhülse zugekehrten, Seite des Klemmrings aufweisen. Da die Öffnungen mit ihrer axialen Ausdehnung zumindest teilweise über der Stützhülse liegen, befindet sich das oder die Klemmelemente ebenso zum größten Teil über der Stützhülse.

In einer weiteren Ausführung des Fittings wird die erzeugte Verpressung als vollzogen angezeigt, sobald die Rückstellhalterung des mindestens einen Klemmelements in der Öffnung der Steckhülse einrastet und so das mindestens eine Klemmelement zum Sicherungsring wird. Hierzu sind die Öffnungen in Form von Sichtfenstern ausgebildet, so dass als Verpressungskennzeichnung die Rückstellhalterungen von außen durch das Fenster sichtbar sind, sobald sie vollständig eingerastet sind. Diese Signalisierung des vollzogenen Einrastens kann zum Beispiel durch eine Einfärbung des Klemmelements begünstigt werden. Somit ist zusätzlich zu der akustischen Verpressungskennzeichnung, die auf Grund des Einrastgeräusches erzeugt wird, ebenso ein optisches Signal als Bestätigung der vollzogenen Montage vorhanden.

Eine weitere Ausbildungsform des Fittings weist die Öffnungen als in die Innenwand der Steckhülse eingelassene Vertiefungen auf. Somit hat die Innenwand der Steckhülse Innenwandrücksprünge, an die formschlüssig oder mit einem gewissen Abstand die Rückstellhalterungen anliegen. Dabei hat die Steckhülse mit einer gleichmäßig ebenen, zylindrischen Außenwand eine hohe Stabilität.

Da vor der Montage des Rohres die Rückstellhalterung außerhalb der Öffnung angeordnet ist, liegt die Rückstellhalterung an der Innenwand der Steckhülse an und drückt dabei das mindestens eine Klemmelement in Richtung auf die Stützhülse zusammen. Somit wird das mindestens eine Klemmelement verformt. In einer Weiterbildung der Erfindung weist das mindestens eine Klemmelement an der inneren Auflagefläche unterhalb der Rückstellhalterungen einen sich in Richtung des freien Endes der Stützhülse aufweitenden Platzhalter auf. Diese Aufweitung kann zylindrisch oder zumindest teilweise zylindrisch erfolgen. Auch eine gekrümmte Aufweitung ist denkbar. Diese Aufweitung sorgt vor der Montage des Rohres dafür, dass das Klemmelement trotz seiner Verformung Abstand zur Stützhülse hält und somit das Einschieben des Rohres zwischen Klemmelement und Stützhülse nicht durch einen zu geringen Abstand des Klemmelements zur Stützhülse behindert wird.

Durch diese Aufweitung und die oben beschriebene Lage der Öffnungen mit eingreifenden Rückstellhalterungen liegt im aufgeschobenen Zustand des Rohres die innere Auflagefläche des Klemmelements am Rohr an und drückt dabei das Rohr mit ihrer gesamten oder zumindest mit ihrem größeren Teil der Ausdehnung direkt auf die Stützhülse. Eine Kraftausübung des Klemmelements auf das Rohr ist somit nur im Bereich der Stützhülse vorhanden. Daher werden die Radialkräfte der Steckhülse und des Klemmelements auf den Teil des Rohres ausgeübt, der über der Stützhülse liegt.

In einer weiteren Ausführungsform weisen die innere Auflagefläche des mindestens einen Klemmelements, die äußere Auflagefläche des Klemmelements und die Innenwand der Steckhülse Rillen oder Vertiefungen auf. Es können aber auch nur eine oder zwei der genannten Flächen beziehungsweise Wänden Vertiefungen aufweisen. Diese Vertiefungen verlaufen vorzugsweise axial zur Stützhülse, damit beim Gleiten der äußeren Auflagefläche des Klemmelements entlang der Innenwand der Steckhülse beim Aufschieben des Rohres zusammen mit dem Klemmelement eine Verkantung der Vertiefungen verringert wird. Die Vertiefungen können dicht nebeneinander angeordnet sein oder einen größeren Abstand zueinander aufweisen. Sie dienen zur Aufnahme von überschüssigem Material, wenn das Klemmelement auf das Rohr gepresst wird.

In einer Ausführung ist der Steckfitting dadurch gekennzeichnet, dass das mindestens eine Klemmelement Vertiefungen an seiner inneren Auflagefläche aufweist.

In einer Ausführung ist der Steckfitting dadurch gekennzeichnet, dass das mindestens eine Klemmelement Vertiefungen an seiner äußeren Auflagefläche aufweist.

In einer Ausführung ist der Steckfitting dadurch gekennzeichnet, dass die Steckhülse Vertiefungen an ihrer Innenwand aufweist.

In einer Ausführung ist der Steckfitting dadurch gekennzeichnet, dass die Vertiefungen in axialer Richtung zur Stützhülse verlaufen.

In einer Ausführung ist der Steckfitting dadurch gekennzeichnet, dass die Steckhülse an der Stützhülse vormontiert ist.

In einer Ausführung ist der Steckfitting dadurch gekennzeichnet, dass eine Ausdehnung der wenigstens zwei Öffnungen in Umfangsrichtung der Steckhülse weniger als 50 % des Umfangs der Steckhülse beträgt.

In einer Ausführung ist der Steckfitting dadurch gekennzeichnet, dass eine Ausdehnung der wenigstens zwei Öffnungen in Umfangsrichtung der Steckhülse 20 % ― 40 %, insbesondere 30 %, des Umfangs der Steckhülse beträgt.

In einer Ausführung ist der Steckfitting dadurch gekennzeichnet, dass die Steckhülse drei Öffnungen mit einer Ausdehnung der drei Öffnung in Umfangsrichtung der Steckhülse zu jeweils ungefähr 10 % des Umfangs der Steckhülse aufweist. Diese Anordnung bewirkt eine besondere Stabilität der Hülse im aufgeschobenen Zustand.

In einer Ausführung ist der Steckfitting dadurch gekennzeichnet, dass das mindestens eine Klemmelement mindestens einen kleinen Klemmsockel aufweist.

In einer Ausführung ist der Steckfitting dadurch gekennzeichnet, dass der mindestens eine kleine Klemmsockel durch Spritzgießen hergestellt ist.

In einer Ausführung ist der Steckfitting dadurch gekennzeichnet, dass das mindestens eine Klemmelement den mindestens einen kleinen Klemmsockel im Wesentlichen konzentrisch und mit gleichen Abständen zueinander an der äußeren Auflagefläche aufweist.

In einer Ausführung ist der Steckfitting dadurch gekennzeichnet, dass das mindestens eine Klemmelement an der inneren Auflagefläche unterhalb der Rückstellhalterung einen sich in Richtung des freien Endes aufweitenden Platzhalter aufweist.

In einer Ausführung ist der Steckfitting dadurch gekennzeichnet, dass der Platzhalter mindestens einen Abschnitt aufweist, der sich konisch in Richtung des freien Endes aufweitet.

In einer Ausführung ist der Steckfitting dadurch gekennzeichnet, dass der Platzhalter mindestens einen Abschnitt aufweist, der sich gekrümmt in Richtung des freien Endes aufweitet.

Die Erfindung wird nachfolgend unter Bezugnahme auf Ausführungsbeispiele und anhand von Zeichnungen näher erläutert. Gleiche Bezugszeichen geben dabei gleiche Elemente in den einzelnen Figuren an. Es sind dabei jedoch keine maßstäblichen Bezüge dargestellt, vielmehr können einzelne Elemente zum besseren Verständnis übertrieben groß dargestellt sein. Die angegebenen Abmessungen oder Größenangaben sind lediglich als nicht beschränkende Bespiele gedacht, die für die dargestellten Ausführungen zweckmäßig erscheinen. Andere Größen, Winkelabstände oder Bemaßungen sind ebenso denkbar. Im Folgenden werden die Ausführungen mit einem einzelnen Klemmring dargestellt. Jedoch kann dieser auch durch ein oder mehrere Klemmelemente gebildet werden, die entsprechend angeordnet ein ringförmiges Klemmelement bilden.

Es zeigen:
- Figur 1: einen Längsschnitt des erfindungsgemäßen Steckfittings mit vollständig montiertem Rohr,
- Figur 2: den Längsschnitt des Steckfittings aus Figur 1 vor der Montage des Rohres,
- Figur 3: eine perspektivische Darstellung des Fittings aus Figur 1 mit erfindungsgemäßen Einführungsschlitz in der Steckhülse zur Aufnahme des kleinen Klemmsockels des Klemmrings, wobei die Darstellung an der Querschnittsebene X-X' abgeschnitten ist,

- Figur 4: einen Längsschnitt eines weiteren Ausführungsbeispiels der Erfindung im montierten Zustand des Rohres,
- Figur 5: den Längsschnitt des in Figur 4 dargestellten Steckfittings vor der Montage des Rohres auf der Stützhülse,
- Figur 6: einen Querschnitt eines Ausführungsbeispiels an der mit X-X' in Figur 1 gekennzeichneten Querschnittsebene zur Erläuterung des Eingreifens der Rückstellhalterungen in die Öffnungen, die hier zu Fenstern ausgebildet sind,
- Figur 7: ein weiteres Ausführungsbeispiel des in Figur 6 dargestellten Querschnitts mit Vertiefungen anstelle der in Figur 6 dargestellten Fenster,
- Figur 8: eine perspektivische Darstellung der erfindungsgemäßen Steckhülse mit gestrichelt dargestellter Innenwand,
- Figur 9: eine perspektivische Darstellung des Klemmrings mit Vertiefungen und Rückstellhalterungen, und
- Figur 10: eine weitere Ausführungsform des Klemmrings in perspektivischer Darstellung mit Vertiefungen, Rückstellhalterungen und kleinen Klemmsockeln.

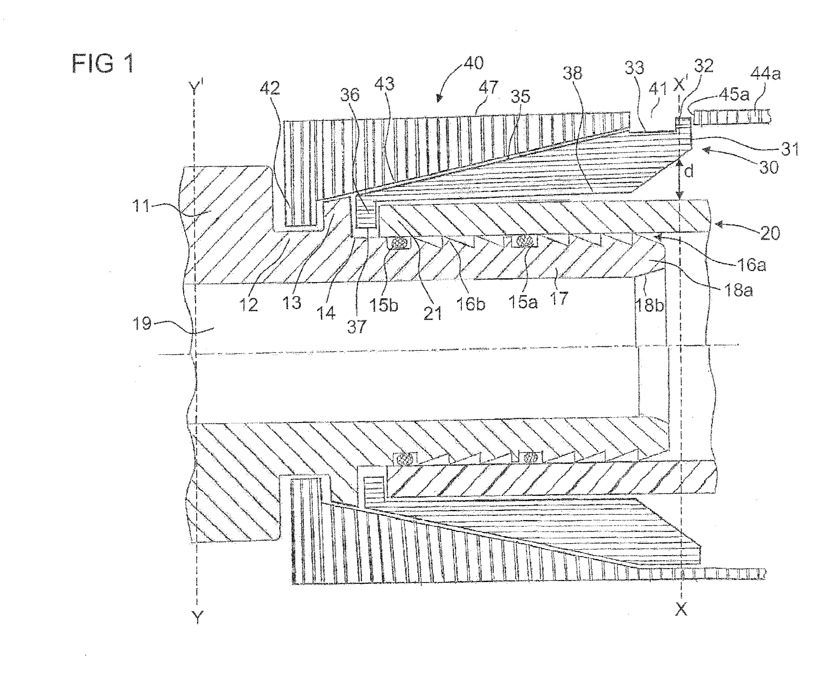

Figur 1 zeigt einen Längsschnitt eines Steckfittings 10 - vorzugsweise aus Metall - welches einen Stützkörper 11 aufweist. Der erfindungsgemäße Steckfitting oder die Steckkupplung 10 kann zum Verbinden von zwei Rohren zu einer Mittelebene Y-Y' spiegelbildlich symmetrisch, als Winkelstück oder beispielsweise als Bestandteil einer Armatur ausgebildet sein. Von dem Stützkörper 11 steht eine Stützhülse 17 mit einem freien Ende 18a abschließend ab.

Die Stützhülse 17 weist eine Außenanschlussfläche 16a mit einer in Umfangsrichtung verlaufender Profilierung 16b auf. Die Profilierung 16b ist in Figur 1 sägezahnförmig mit abgerundeten Kanten ausgebildet, wobei hierbei die abrupt abfallenden Flächen in Richtung vom freien Ende 18a weg angeordnet sind. Dies erschwert ein Abziehen eines aufgesteckten Rohres. In einem weiteren Ausführungsbeispiel kann die Profilierung 16b der Stützhülse 17 in axialer Richtung wellenförmig ausgebildet sein oder eine Mischform der beiden genannten Formen bilden.

Des Weiteren zeigt Figur 1 an der Außenanschlussfläche 16a zwei Aufnahmenuten 15a zur Aufnahme von gummielastischen Dichtringen 15b, beispielsweise O-Ringen. In weiteren Ausführungsbeispielen können auch weniger beziehungsweise mehr Aufnahmenuten 15a mit teilweise versenkten Dichtringen 15b aufgeführt sein.

Ferner hat die Stützhülse 17 eine Innenwand 18b, die sich in einem Abschnitt in Richtung des freien Endes 18a hin aufweitet. Diese Aufweitung spart beispielsweise die Form eines Kegelstumpfes in der Stützhülse 17 am freien Ende 18a aus. Die Innenwand 18b der Stützhülse 17 formt einen fluid- beziehungsweise medienführenden Durchlass 19. Des Weiteren bildet die Stützhülse 17 mit ihrer Außenanschlussfläche 16a einen im Wesentlichen rohrförmigen Anschlussbereich zum Anschließen eines Rohres 20.

Beim anschließbaren Rohr 20 handelt es sich um ein fluid- beziehungsweise medienführendes Rohr, dessen Wandung mindestens eine Schicht aus Kunststoff aufweist. Es kann sich aber auch um ein Kunststoffmetallverbundrohr oder um ein Metallrohr mit Kunststoffinnenbeschichtung und gegebenenfalls auch Kunststoffaußenbeschichtung handeln.

Ferner weist die Stützhülse 17, dem freien Ende 18a abgewandt und somit dem Stützkörper 11 benachbart, eine Führungsnut 12 mit einem abschließenden Führungsvorsprung 13 auf. Der Führungsvorsprung 13 ist ein in Umfangsrichtung verlaufender Wulst, der wie in der Zeichnung eckig aber auch abgerundet gestaltet sein kann. In die Führungsnut 12 greift formschlüssig ein Führungselement 42 einer Steckhülse 40 ein.

Die Steckhülse 40 umschließt die Stützhülse 17 radial, spart dabei aber einen Ringspalt 22 zum Einführen des Rohres 20 zwischen der Stützhülse 17 und der Steckhülse 40 aus. Die Steckhülse 40 hat eine zylindrische Außenwand 47, die der Stützhülse 17 abgewandt ist, und eine aufweitende Innenwand 43, die der Stützhülse 17 zugewandt ist. Insbesondere ist die Innenwand 43 in Figur 1 in zwei Abschnitte unterteilt, wobei der erste Abschnitt, der dem Führungselement 42 benachbart ist, sich konisch in Richtung des freien Endes 18a aufweitet und der anschließende Abschnitt ein gerades Endstück 44a bildet.

In einem weiteren Ausführungsbeispiel kann die Innenwand 43 der Steckhülse 40 mehr als zwei Abschnitte aufweisen, wobei jedoch mindestens ein Abschnitt sich konisch oder zumindest gekrümmt in Richtung des freien Endes 18a aufweitet.

Des Weiteren weist die Steckhülse 40 eine Öffnung 41 der Innenwand 43 auf. In Figur 1 ist die Öffnung zu einem Fenster ausgebildet. Alternativ kann die Öffnung 41 auch eine Vertiefung sein, die nicht bis zur zylindrischen Außenwand 47 hindurchreicht. Die Öffnung 41 liegt wenigstens teilweise über der Stützhülse 17. Zusätzlich sind in gleicher Weise im Wesentlichen konzentrisch und in regelmäßigen Abständen in Umfangsrichtung an der Steckhülse 40 weitere Öffnungen 41 angeordnet, die jedoch im Längsschnitt der Figur 1 nicht sichtbar sind. Die Ausdehnung der Öffnungen 41 der Steckhülse 40 in Umfangsrichtung betragen zusammen weniger als 50 %, damit die Steckhülse 40 einer gewissen Belastung Stand hält. Ein Verhältnis von der Ausdehnung der Öffnungen 41 der Steckhülse 40 zur Innenwand 43 der Steckhülse 40 in Umfangsrichtung kann 30 % zu 70 % betragen, wobei beispielsweise drei Öffnungen 41 mit jeweils ungefähr 10 % Ausdehnung in Umfangsrichtung der Steckhülse 40 ausgebildet sind.

Im Ringspalt 22 ist neben dem Rohr 20 zwischen Rohr 20 und Steckhülse 40 ein Klemmring 30 angeordnet. Der Klemmring 30 umfasst beispielsweise Plastik oder Plastikverbundmaterial, welches den Klemmring 30 teilweise verformbar macht. Der Klemmring 30 hat eine innere Auflagefläche 38, die der Stützhülse 17 zugewandt ist und an dem Rohr 20 anliegt, und eine äußere Auflagefläche 35, die der Stützhülse 17 abgewandt ist und formschlüssig der Innenwand 43 der Steckhülse 40 anliegt. Somit weitet sich die äußere Auflagefläche 35 des Klemmrings 30 zumindest in einem Abschnitt konisch oder zumindest gekrümmt in Richtung des freien Endes 18a auf.

Sowohl innere Auflagefläche 38 als auch äußere Auflagefläche 35 des Klemmrings 30 und auch die Innenwand 43 der Steckhülse 40 weisen axial zur Stützhülse 17 verlaufende Vertiefungen auf, die bei einem Einklemmen des Klemmrings 30 zwischen die Steckhülse 40 und das Rohr 20, beziehungsweise die Stützhülse 17, zum Ausweichen von überschüssigem Material ausgebildet sind. Die Vertiefungen sind in Figur 1 jedoch nicht gezeigt. In anderen Ausführungsbeispielen weisen keine, eine oder zwei der eben genannten Ebenen beziehungsweise Flächen 35, 38 oder 43 Vertiefungen auf.

Ferner umfasst der Klemmring 30 eine Rückstellhalterung 32, die in die Öffnung 41 der Steckhülse 40 eingreift. Somit ist zu jeder Öffnung 41 eine Rückstellhalterung 32 vorhanden. Das Eingreifen der Rückstellhalterung 32 in die Öffnung 41 dient zur axialen Sicherung des Klemmrings 30 im Ringspalt 22.

An der der Rückstellhalterung 32 gegenüberliegenden Seite des Klemmrings 30 ist eine Mitnahmevorrichtung 36 angeordnet, die mit einer Seite am Rohr 20 und mit einer gegenüber liegenden Seite am Führungsvorsprung 13 der Stützhülse 17 anliegen kann. Die Mitnahmevorrichtung 36 hat einen Mitnahmevorrichtungsabschluss 37 der entweder formschlüssig an einer Anlagefläche 14 der Stützhülse 17 anliegt oder etwas Abstand zu dieser hält. Die Mitnahmevorrichtung 36 ist hier am unteren Ende des Klemmrings angeordnet, sie kann jedoch auch etwas näher an der Rückstellhalterung 32 liegen. In diesem Fall kann das aufsteckbare Rohr beispielsweise im entsprechenden Abstand von seinem Ende eine leichte Vertiefung aufeisen, so dass die Mitnahmevorrichtung bei einem Aufschieben des Rohres eingreift und so der Klemmring vom Rohr mitgeführt wird.

Zusätzlich spart der Klemmring 30 an der inneren Auflagefläche 38 unterhalb der Rückstellhalterung 32 einen aufweitenden Platzhalter 39 aus, indem sich die innere Auflagefläche 38 konisch in Richtung des freien Endes 18a aufweitet. In einem weiteren Ausführungsbeispiel kann sich die innere Auflagefläche 38 zum Aussparen des Platzhalters 39 gekrümmt in Richtung des freien Endes 18a aufweiten.

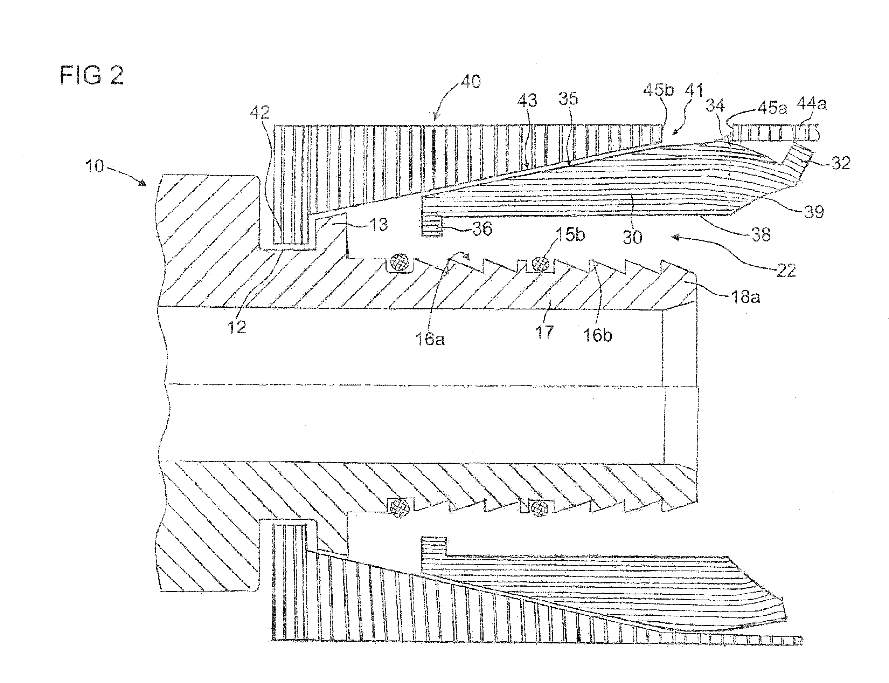

Figur 2 zeigt im Wesentlichen den Steckfitting 10 aus Figur 1 ohne aufgeschobenes Rohr 20. Der Stützkörper 11 mit abstehender Stützhülse 17 ist in gleicher Weise ausgebildet wie in Figur 1 und ebenso ist auch die Steckhülse 40 mit ihrem Führungselement 42 an der Stützhülse 17 gelagert. Im Ringspalt 22 ist der Klemmring 30 axial mit einem kleinen Klemmsockel 34 an der Steckhülse 40 gesichert, indem der kleine Klemmsockel 34 in die Öffnung 41 der Steckhülse 40 eingreift. Hierbei drückt der kleine Klemmsockel 34 gegen eine äußere Öffnungswand 45a angrenzend zum geraden Endstück 44a der Steckhülse 40.

Des Weiteren ist aus Figur 2 ersichtlich, dass durch das Anliegen der Rückstellhalterung 32 des Klemmrings 30 an dem geraden Endstück 44a der Steckhülse 40 der Klemmring 30 an einer der Mitnahmevorrichtung 36 gegenüberliegenden Hälfte des Klemmrings 30 verformt wird. Der aufweitende Platzhalter 39 stellt dabei sicher, dass der Klemmring 30 einen genügend großen Abstand zur Stützhülse 17 aufweist, so dass das Rohr zwischen Klemmring 30 und Stützhülse 17 eingeführt werden kann.

Um von der Anordnung des Steckfittings 10 in Figur 2 zu der Anordnung des Steckfittings 10 in Figur 1 zu gelangen, wird das Rohr 20 über das freie Ende 18a der Stützhülse 17 geschoben. Somit gleitet das Rohr 20 an der Außenanschlussfläche 16a der Stützhülse 17 entlang, bis ein vorderes Ende 21 des Rohres 20 die Mitnahmevorrichtung 36 des Klemmrings 30 berührt. Bei weiterem Aufschieben des Rohres 20 auf die Stützhülse 17 wird nun der Klemmring 30 durch die Mitnahmevorrichtung 36 zusammen mit dem Rohr 20 entgegen des freien Endes 18a über die Stützhülse 17 geschoben. Hierbei löst sich der kleine Klemmsockel 34 von der äußeren Öffnungswand 45a der Steckhülse 40. Der Klemmring 30 gleitet dabei mit seiner äußeren Auflagefläche 35 an der aufweitenden Innenwand 43 der Steckhülse 40 entlang. Da in Schubrichtung die Innenwand 43 der Steckhülse 40 verjüngend ist, wird der Klemmring 30 mit seiner inneren Auflagefläche 38 zunehmend auf das Rohr 20 gedrückt und somit die Reibung zwischen innerer Auflagefläche 38 und Rohr 20 vergrößert.

Der Fitting 10 befindet sich in einem eingerasteten Zustand, sobald die Rückstellhalterung 32 des Klemmrings 30 in die Öffnung 41 der Steckhülse 40 eingreift. Dieser Zustand ist in Figur 1 gezeigt. Der Klemmring 30 ist somit gegen ein axiales Herausziehen aus dem Ringspalt 22 gesichert. Da, wie oben erwähnt, der Betrag der Reibung zwischen innerer Auflagefläche 38 des Klemmrings 30 und Rohr 20 durch das Aufschieben des Rohres 20 auf die Stützhülse 17 zunehmend vergrößert wird, wird somit das Rohr 20 durch diesen Reibschluss am Klemmring 30 und damit auf der Stützhülse 17 gegen eine axiale Verschiebung fixiert. Gleichzeitig wird ein Herausziehen des Rohres 20 auch durch das Eingreifen der Rückstellhalterung 32 in die Öffnung 41 verhindert.

Zudem ist in einer Ausführung des Steckfittings 10 eine Reibung zwischen der Innenwand 43 der Steckhülse 40 und der äußeren Auflagefläche 35 des Klemmrings 30 von kleinerem Betrag als eine Reibung zwischen dem Rohr 20 und der inneren Auflagefläche 38 der Klemmrings 30. Somit leistet der Klemmring 30 nur geringen Widerstand beim Einschieben des Rohres 20 in den Ringspalt 22, allerdings ein Herausziehen des Rohres 20 aus dem Ringspalt 22 wird durch die größere Reibung zwischen dem Rohr 20 und der inneren Auflagefläche 38 des Klemmrings 30 erschwert.

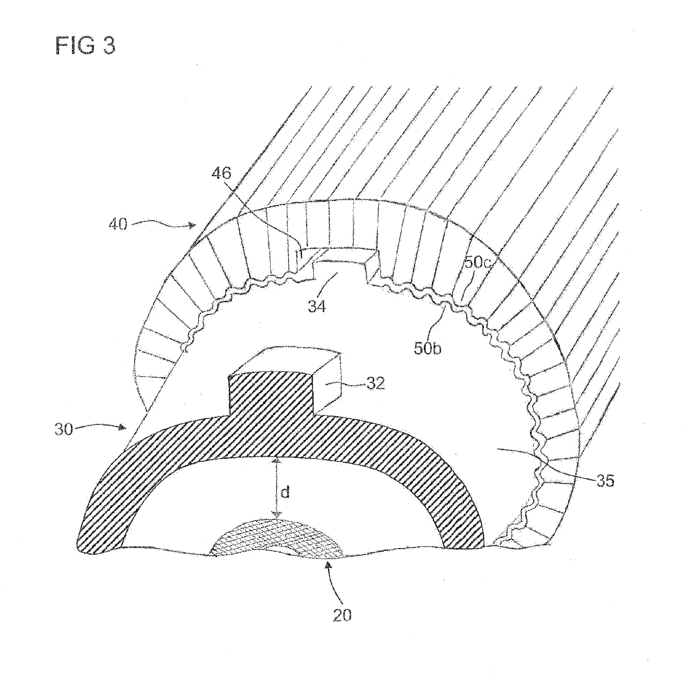

Figur 3 zeigt eine perspektivische Darstellung des Fittings 10 aus Figur 1, wobei die Darstellung des Fittings an der Querschnittsebene X-X' abgeschnitten ist. Das Rohr 20 ist mit einem Abstand d zum Klemmring 30 angeordnet. Der Abstand d ist durch den aufweitenden Platzhalters 39 des Klemmrings 30 verursacht.

Auf der äußeren Auflagefläche 35 des Klemmrings 30 sind zwei abstehende Vorsprünge angeordnet. Der freiliegende Vorsprung bildet hierbei die Rückstellhalterung 32 aus den Figuren 1 und 2. Dieser Vorsprung ist größer als der zweite. Der zweite Vorsprung, der in einem Einführungsschlitz 46 der Steckhülse 40 angeordnet ist, ist der in Figur 2 gezeigte kleine Klemmsockel 34.

Die Steckhülse 40 weist den formschlüssigen Einführungsschlitz 46 zur Einführung des auf der äußeren Auflagefläche 35 des Klemmrings 30 sitzenden kleinen Klemmsockels 34 auf. Demnach ist bei einem Aufschieben des Rohres 20 auf die Stützhülse 17, und der damit verbundenen axialen Bewegung des Klemmrings 30, der kleine Klemmsockel 34 in seinem Endzustand, bei dem die Rückstellhalterung 32 des Klemmrings 30 in die Öffnung 41 der Steckhülse 40 eingreift, im Einführungsschlitz 46 der Steckhülse 40 gelagert.

In einem weiteren Ausführungsbeispiel umfasst der kleine Klemmsockel 34 des Klemmrings 30 kompressibles Plastik und wird bei einem Aufschieben des Rohres 20 zusammen mit dem Klemmring 30 von der Steckhülse 40 an der Innenwand 43 zusammengepresst. Auch hier ist im Endzustand, wenn die Rückstellhalterung 32 in die Öffnung 41 eingreift, der kleine Klemmsockel 34 unterhalb der Steckhülse 40.

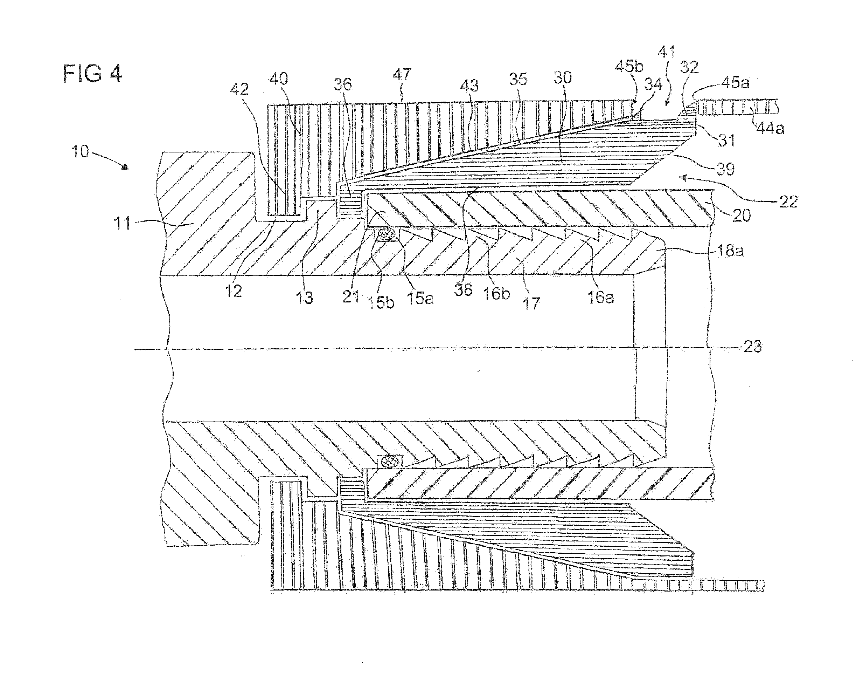

Figur 4 zeigt ein Beispiel einer weiteren Ausführungsform im Längsschnitt des Fittings 10. Von einem Stützkörper 11 steht eine Stützhülse 17 ab, die benachbart zum Stützkörper 11 eine Führungsnut 12 mit einem anschließenden Führungsvorsprung 13 aufweist. Vom Führungsvorsprung 13 aus in Richtung eines freien Endes 18a des Stützkörpers 17 verjüngt sich der Stützkörpers 17 stufenförmig bis zu einer Aufnahmenut 15a. In der Aufnahmenut 15a ist ein Dichtring 15b angeordnet. Der Abschnitt der Stützhülse 17 zwischen der Aufnahmenut 15a und dem freien Ende 18a weist in Umfangsrichtung eine Profilierung 16b an einer Außenanschlussfläche 16a auf.

In der Führungsnut 12 ist ein Führungselement 42 einer Steckhülse 40 gelagert, die die Stützhülse 17 radial umgibt. Die Steckhülse 40 weist eine zylindrische Außenwand 47 auf. Eine Innenwand 43 der Steckhülse 40 ist in Figur 4 in drei Abschnitte untergliedert, wobei der Abschnitt, der dem Führungselement 42 benachbart ist, formschlüssig dem Führungsvorsprung 13 der Stützhülse 17 anliegt. Der mittlere Abschnitt weitet sich konisch in Richtung des freien Endes 18a auf. Der letzte Abschnitt der Innenwand 43 der Steckhülse 40 verläuft parallel zur zylindrischen Außenwand 47 und bildet ein gerades Endstück 44a.

In der Steckhülse 40 sind drei Öffnungen 41 ausgespart, wobei aber nur eine davon im Längsschnitt sichtbar dargestellt ist. Die drei Öffnungen 41 sind konzentrisch und mit gleichen Abständen in Umfangsrichtung an der Steckhülse 40 angeordnet. Eine Ausdehnung der Öffnung 41 beträgt jeweils in etwa 10 % des Umfangs der Steckhülse 40. Die Öffnung 41 der Steckhülse 40 ist in axialer Richtung begrenzt durch eine innere Öffnungswand 45b, die an die konisch aufweitende Innenwand 43 angrenzt, und einer äußeren Öffnungswand 45a, die an die parallel zur zylindrischen Außenwand 47 verlaufende Innenwand 43 der Steckhülse 40 angrenzt.

Die Steckhülse 40 mit ihrer Innenwand 43, die sich konisch in Richtung des freien Endes 18a aufweitet, bildet zusammen mit der Stützhülse 17 einen Ringspalt 22. In diesem Ringspalt 22 ist ein Rohr 20 auf die Stützhülse 17 aufgeschoben und ein vorderes Ende 21 des Rohres 20 liegt an den Stufen der Stützhülse 17 an. Weiterhin ist im Ringspalt 22 zwischen Rohr 20 und Steckhülse 40 ein Klemmring 30 angeordnet. Der Klemmring 30 umfasst ein verformbares und inkompressibles Material.

An der, dem freien Ende 18a der Stützhülse 17 abgewandten, Seite der Stützhülse, weist der Klemmring 30 eine Mitnahmevorrichtung 36 auf. Die Mitnahmevorrichtung 36 ist gebildet von einem zur Stützhülse 17 hin gerichteten, in Umlaufsrichtung verlaufenden Vorsprung des Klemmrings 30.

Des Weiteren weist der Klemmring 30 eine zylindrische innere Auflagefläche 38, die der Stützhülse 17 zugewandt ist und dem Rohr 20 anliegt, auf. Eine äußere Auflagefläche 35 des Klemmrings 30 verläuft im Wesentlichen formschlüssig zu der sich konisch in Richtung des freien Endes 18a aufweitenden Innenwand 43 der Steckhülse 40.

Oberhalb des freien Endes 18a der Stützhülse 17 weist der Klemmring 30 einen Platzhalte 39 auf, der sich konisch in Richtung des freien Endes 18a aufweitet.

An der äußeren Auflagefläche 35 des Klemmrings 30 sind axial in einem gewissen Abstand zwei Vorsprünge des Klemmrings 30 angeordnet, die in die Öffnung 41 der Steckhülse 40 eingreifen. Der größere Vorsprung ist als Rückstellhalterung 32 ausgebildet und liegt mit einer Rückwand 31 der äußeren Öffnungswand 45a der Steckhülse 40 an. Durch dieses Anliegen wird der Klemmring 30 axial im Ringspalt 22 gesichert. Der kleinere Vorsprung liegt zwischen der Mitnahmevorrichtung 36 und der Rückstellhalterung 32 an der äußeren Auflagefläche 35 des Klemmrings 30. Er ist als kleiner Klemmsockel 34 ausgebildet und liegt in Figur 4 an der inneren Öffnungswand 45b der Steckhülse 40 an. Sowohl die Rückstellhalterung 32 als auch der kleine Klemmsockel 34 sind flossen- oder sägezahnförmig ausgebildet. Beide weisen eine gekrümmte Oberfläche, die der inneren Öffnungswand 45b zugewandt ist, und eine gerade Rückwand (bei der Rückstellhalterung 32 mit 31 bezeichnet), die der äußeren Öffnungswand 45a der Steckhülse 40 zugewandt ist, auf.

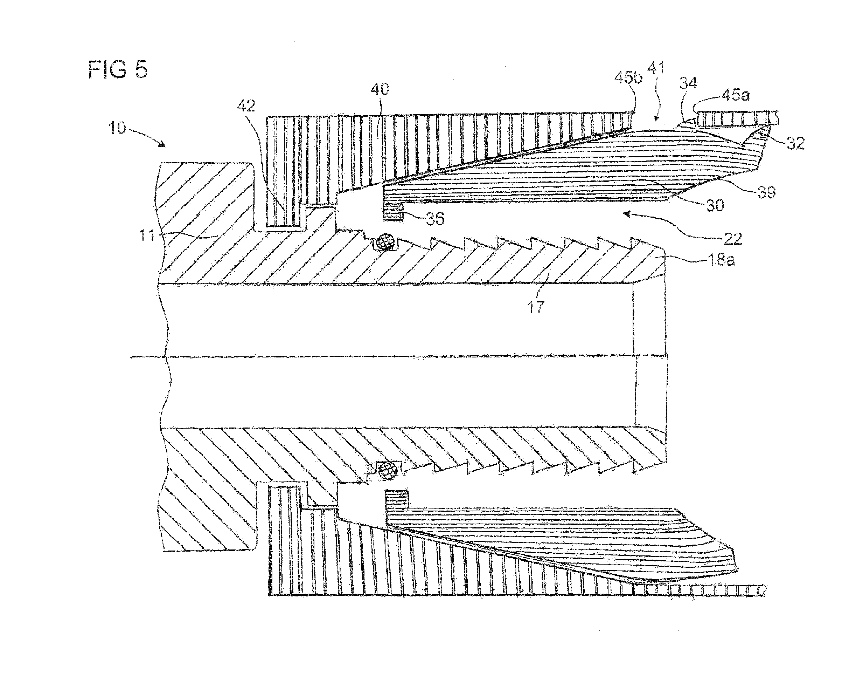

Figur 5 zeigt den Steckfitting 10 aus Figur 4 vor der Montage des Rohres 20 auf dem Stützkörper 17. Durch die flossenförmige Form der Rückstellhalterung 32 wird vor dem Aufschieben des Rohres 20 durch die gekrümmte Oberfläche der Rückstellhalterung 32 der Klemmring 30 nur wenig in Richtung der Stützhülse 17 verbogen.

Ferner leistet, bei einem Aufschieben des Rohres 20 auf die Stützhülse 17 und dabei Mitnahme des Klemmrings 30, die abgerundete Oberfläche der Rückstellhalterung 32 des Klemmrings 30 einen geringen Widerstand, da die Rückstellhalterung 32 mit geringer Reibung an der Innenwand 43 der Steckhülse 40 entlang gleitet. Zusätzlich bietet im montierten Zustand des Rohres 20 die Sägezahnform der Rückstellhalterung 32 eine gute Sicherung des Klemmrings 30 an der Steckhülse 40, da die genannte Form eine verbesserte Stabilität der Rückstellhalterung 32 gewährleistet.

Der kleine Klemmsockel 34 sorgt wie in Figur 2 dafür, dass der Klemmring 30 nicht axial aus dem Ringspalt 22 herausfallen kann, indem er an der äußeren Öffnungswand 45a der Steckhülse 40 anliegt. Auch der kleinen Klemmsockel 34 weist mit seiner Sägezahnform eine verbesserte Stabilität während des Anliegens an der äußeren Öffnungswand 45a zur Sicherung des Klemmrings 30 im Ringspalt 22 auf.

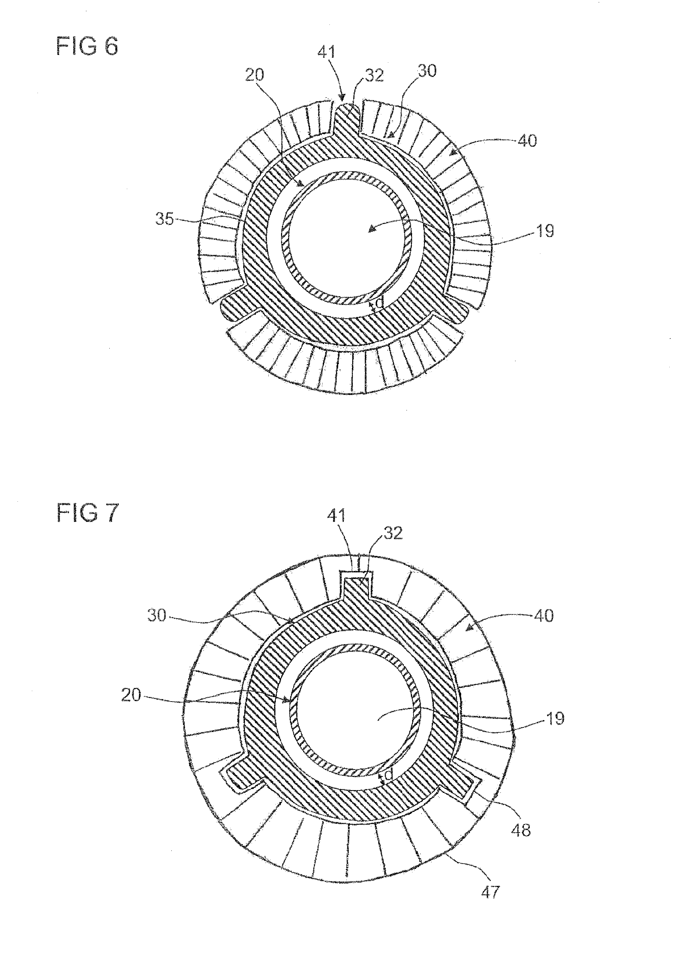

Figur 6 zeigt einen Querschnitt des in Figur 1 gezeigten Steckfittings 10 an der mit X-X' gekennzeichneten Querschnittsebene. Von Innen im Zentrum beginnend zeigt Figur 6 den Medien oder Fluiddurchlass 19, der von dem Rohr 20 umschlossen wird. Das Rohr 20 hält einen Abstand d zum Klemmring 30. Der Abstand d ist durch den sich zylindrisch in Richtung des freien Endes 18a aufweitenden, in Figur 1 dargestellten Platzhalter 39 ausgebildet. Der Klemmring 30 weist drei Rückstellhalterungen 32 auf, die im Beispiel jeweils in einem Winkel von 120° koaxial an der äußeren Auflagefläche 35 des Klemmrings 30 angeordnet sind. In Figur 6 sind die Rückstellhalterungen 32 mit abgerundeter Oberfläche dargestellt. Den Klemmring 30 umgibt die Steckhülse 40, die drei Öffnungen 41 ausspart. In die Öffnungen 41 greifen die drei Rückstellhalterungen 32 des Klemmrings 30 ein.

Figur 7 zeigt einen Querschnitt des Steckfittings 10 an derselben Querschnittsfläche X-X' aus Figur 1, jedoch eines unterschiedlichen Ausführungsbeispiels. Wiederum umschließt das Rohr 20 den Fluiddurchlass 19 und ist im Abstand d zum Klemmring 30 angeordnet Der Klemmring weist abermals drei Rückstellhalterungen 32, allerdings diesmal mit eckiger Form, auf. Die Steckhülse 40 umgibt den Klemmring 30. Sie hat eine zylindrische Außenwand 47. In dem in Figur 7 gezeigten Ausführungsbeispiel sind die drei Öffnungen 41 der Steckhülse 40 als Vertiefungen der Innenwand 43 der Steckhülse ausgebildet. Somit bilden die Vertiefungen 41 einen Innenwandrücksprung 48 der Innenwand 43 der Steckhülse 40. An diesem Innenwandrücksprung 48 liegt formschlüssig die Rückstellhalterung 32 an. Die Steckhülse 40 hat somit eine gleichmäßig ebene Oberfläche der Außenwand 47, die eine hohe Stabilität der Steckhülse ermöglicht.

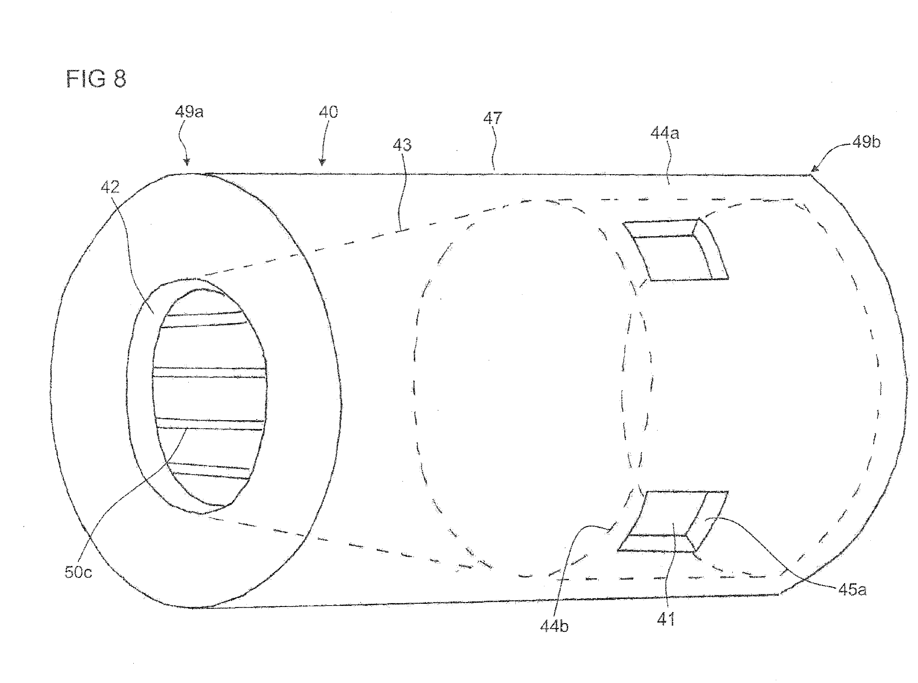

Figur 8 zeigt eine perspektivische Darstellung der Steckhülse 40. Die Außenwand 47 der Steckhülse 40 ist im Wesentlichen zylindrisch ausgebildet. An einem ersten Ende 49a der Steckhülse 40 ist ein radial nach innen weisender Vorsprung angeordnet, der als Führungselement 42 dazu ausgebildet ist, in die Führungsnut 12 der Stützhülse 17 einzugreifen.

Die Innenwand 43 der Steckhülse 40 weitet sich vom Führungselement 42 zu einem zweiten Ende 49b hin auf. Diese Aufweitung der Innenwand 43 endet an einer Überganslinie 44b, bevor Öffnungen 41 in der Innenwand 43 ausgespart sind. Ab dieser Position verläuft die Innenwand 43 parallel zur zylindrischen Außenwand 47 bis zum zweiten Ende 49b.

Die Öffnungen 41 sind in Figur 8 rechteckig dargestellt. Die Öffnungen 41 können sowohl rechteckig als auch als ovale beziehungsweise runde Fenster ausgebildet sein. Es sind mindestens eine - im Idealfall mehrere - Öffnungen 41 koaxial in Umfangsrichtung an der Steckhülse 40 angeordnet. Die Summe der Ausdehnungen der Öffnungen 41 in Umfangsrichtung beträgt hierbei in jedem Fall weniger als 50 % der Innenwand 43 der Steckhülse in Umfangsrichtung. Des Weiteren ist die sich konisch aufweitende Innenwand 43 der Steckhülse 40 mit axial verlaufenden Vertiefungen 50c versehen. Die Vertiefungen 50c weisen in Umfangsrichtung eine wellen- oder zinnenförmige O― berfläche auf. Die Vertiefungen 50c sind dazu ausgebildet, überschüssiges Material der Steckhülse 40 oder des Klemmrings 30 aufzunehmen, wenn das Rohr 20 vollständig auf die Stützhülse 17 aufgeschoben ist, wie es in Figur 1 und Figur 4 gezeigt ist. In einer alternativen Ausführung der Steckhülse 40 kann die aufweitende Innenwand 43 ohne Vertiefungen 50c ausgebildet sein.

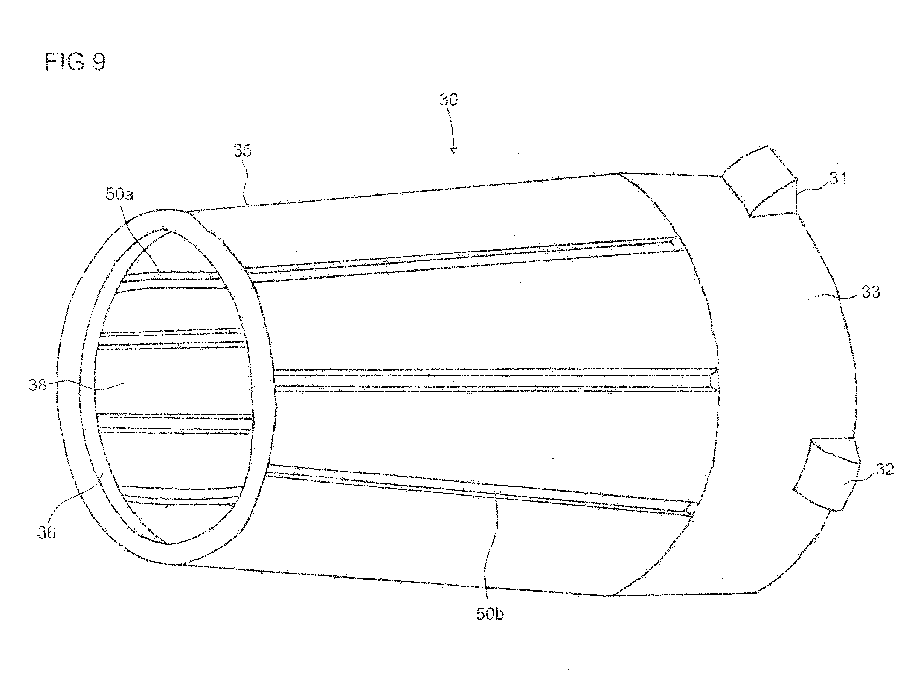

Figur 9 zeigt eine perspektivische Darstellung des Klemmrings 30. Der Klemmring 30 weist eine zylindrische innere Auflagefläche 38 auf. Die äußere Auflagefläche 35 weitet sich konisch auf. An dem Ende, an dem der Abstand der inneren Auflagefläche 38 zur äußeren Auflagefläche 35 geringer ist, weist der Klemmring 30 einen in Umfangsrichtung verlaufenden Vorsprung der inneren Auflagefläche 38 auf. Dieser Vorsprung dient als Mitnahmevorrichtung 36. Die dargestellten Kanten der Mitnahmevorrichtung 36 können auch abgerundet sein.

An dem Ende, an dem der Abstand zwischen innerer Auflagefläche 38 und äußerer Auflagefläche 35 größer ist, endet die Aufweitung der äußeren Auflagefläche 35 noch bevor der Klemmring 30 endet. Hier schließt der Klemmring 30 mit einer koaxial zur inneren Auflagefläche 38 verlaufenden Zwischenwand 33 ab, von der die drei Rückstellhalterungen 32 abstehen. Die Rückstellhalterungen 32 besitzen eine gekrümmte Oberfläche, die der Mitnahmevorrichtung 36 zugewandt ist. Des Weiteren schließen die Rückstellhalterungen 32 mit einer normal auf die Zwischenwand 33 stehenden Rückwand 31, die der Mitnahmevorrichtung 36 abgewandt ist, ab. Die Rückstellhalterungen 32 sitzen in dieser Ausführungsform am äußeren Ende der Zwischenwand 33 und somit schließen die Rückwände 31 zusammen mit dem Klemmring 30 ab.

Ferner weist die innere Auflagefläche 38 des Klemmrings 30 Vertiefungen 50a auf. Die Vertiefungen 50a verlaufen axial am Klemmring 30 und sind in Umfangsrichtung des Klemmrings 30 wellen- oder zinnenförmig ausgebildet. Zusätzlich weist der Klemmring 30 an der sich aufweitenden äußeren Auflagefläche 35 weitere Vertiefungen 50b auf, die ebenfalls in Umfangsrichtung wellen- oder zinnenförmig ausgebildet sind. Ein weiteres Ausführungsbeispiel kann gegebenenfalls nur an einer oder keiner der Auflageflächen 35 und 38 Vertiefungen 50a und 50b aufweisen. Die Vertiefungen 50a und 50b sind dazu ausgebildet, Material des Klemmrings 30 aufzunehmen, wenn dieser von der Steckhülse 40 und dem Rohr 20 zusammengepresst wird. Eine Breite und Anzahl der Wellen- oder Zinnen in Umfangsrichtung des Klemmrings 30 hängt dabei von einer Kompressibilität des Klemmrings 30 und von einem auf den Klemmring 30 wirkenden Druck ab.

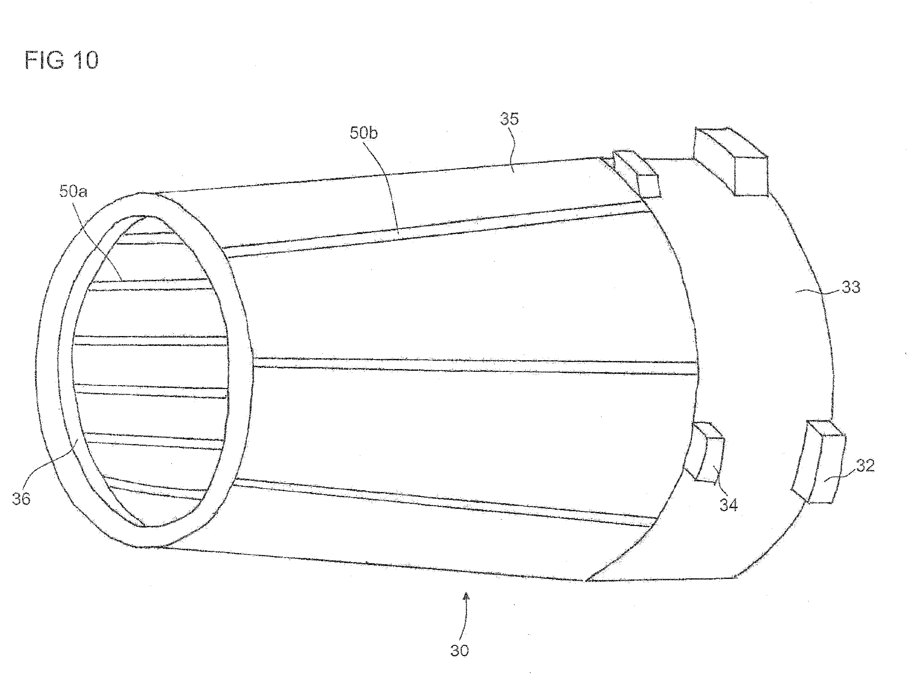

Figur 10 zeigt ein weiteres Beispiel des in Figur 9 dargestellten Klemmrings 30. In axialer Richtung parallel zu den Rückstellhalterungen 32 weist der Klemmring 30 an der Zwischenwand 33 kleinere Vorsprünge auf. Diese Vorsprünge sitzen an einer Grenze zwischen aufweitender äußeren Auflagefläche und Zwischenwand 33. Die Vorsprünge sind als kleiner Klemmsockel 34 ausgebildet und dienen vor der Montage des Rohres zur axialen Sicherung des Klemmrings an der Steckhülse 40. Der kleine Klemmsockel 34 weist die gleiche Form - jedoch in seinem Ausmaß kleiner - wie die Rückstellhalterung 32 auf.

In einer anderen Ausführungsform können Rückstellhalterung 32 und kleiner Klemmsockel 34 auch unterschiedliche Form aufweisen. Ebenso kann der kleine Klemmsockel 34 größer in seinem Ausmaß sein als die Rückstellhalterung 32. Es sind jedoch immer höchstens genauso viele kleine Klemmsockeln 34 vorhanden wie Rückstellhalterungen 32.

Die hier beschriebene Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Schutzansprüchen beinhaltet, auch wenn dieses Merkmal oder diese Kombination selbst nicht explizit in den Schutzansprüchen oder Ausführungsbeispielen angegeben ist.

### Bezugszeichenliste

- 10: Fitting
- 11: Stützkörper
- 12: Führungsnut
- 13: Führungsvorsprung
- 14: Anlagefläche
- 15a: Aufnahmenut
- 15b: Dichtring
- 16a: Außenanschlussfläche
- 16b: Profilierung
- 17: Stützhülse
- 18a: freies Ende
- 18b: Innenwand
- 19: Medien-/Fluiddurchlass

- 20: Rohr
- 21: vorderes Ende
- 22: Ringspalt

- 30: Klemmring
- 31: Rückwand
- 32: Rückstellhalterung
- 33: Zwischenwand
- 34: kleiner Klemmsockel
- 35: äußere Auflagefläche
- 36: Mitnahmevorrichtung
- 37: Mitnahmevorrichtungsabschluss
- 38: innere Auflagefläche
- 39: aufweitender Platzhalter

- 40: Steckhülse
- 41: Öffnung

- 42: Führungselement
- 43: aufweitende Innenwand
- 44a: Endstück
- 44b: Übergangslinie
- 45a: äußere Öffnungswand
- 45b: innere Öffnungswand
- 46: Einführungsschlitz
- 47: Außenwand
- 48: Innenwandrücksprung
- 49a: erstes Ende
- 49b: zweites Ende

- 50a: Vertiefungen an innerer Auflagefläche des Klemmrings
- 50b: Vertiefungen an äußerer Auflagefläche des Klemmrings
- 50c: Vertiefungen an Innenwand der Steckhülse

- X-X': Querschnittsebene
- Y-Y': Mittelebene

## Patentansprüche

1. Steckfitting für ein Rohr, insbesondere Kunststoff- oder Kunststoff-Metall-Verbundrohr, mit
- einem Stützkörper (11), der eine Stützhülse (17) mit einem freien Ende (18a) aufweist, auf das ein Rohr (20) aufschiebbar ist,
- einer am Stützkörper (11) geführten und die Stützhülse (17) umgebenden Steckhülse (40) mit einer sich in Richtung des freien Endes (18a) aufweitenden Innenwand (43), die mindestens eine Öffnung (41) aufweist,
- mindestens ein zwischen Steckhülse (40) und Stützhülse (17) angeordneten und axial zur Stützhülse (17) bewegbaren Klemmelement (30), vorzugsweise ein Klemmring, das mindestens eine Rückstellhalterung (32) aufweist, die ausgebildet ist, in die mindestens eine Öffnung (41) der Innenwand (43) der Steckhülse (40) einzugreifen,
- wobei das mindestens eine Klemmelement (30) eine innere Auflagefläche (38), die der Stützhülse (17) zugewandt ist, und eine äußere, sich in Richtung des freien Endes (18a) der Stützhülse (17) aufweitende, Auflagefläche (35), die der Stützhülse (17) abgewandt ist, aufweist, so dass das mindestens eine Klemmelement (30) und die Steckhülse (40) zur axialen Fixierung des Rohres (20) auf der Stützhülse (17) zusammenwirken.

2. Steckfitting nach Anspruch 1 , **dadurch gekennzeichnet, dass** das mindestens eine Klemmelement (30) nahe dem, dem mindestens einen Rückstellhalterung (32) aufweisenden Ende abgewandten Ende eine Mitnahmevorrichtung (36) aufweist, die dazu ausgebildet ist, beim Aufschieben des Rohres (20) über das freie Ende (18a) das mindestens eine Klemmelement (30) mitzunehmen.

3. Steckfitting nach einem der Ansprüche 1 bis 2, **dadurch gekennzeichnet, dass** die Stützhülse (17) zumindest eine Führungsnut (12) und die Steckhülse (40) jeweils ein Führungselement (42) korrespondierend zur zumindest einen Führungsnut (12) aufweisen oder dass die Stützhülse (17) zumindest ein Führungselement (42) und die Steckhülse (40) jeweils eine Führungsnut (12) korrespondierend zum zumindest einen Führungselement (42) aufweisen.

4. Steckfitting nach einem der Ansprüche 1 bis 3, **dadurch gekennzeichnet, dass** die mindestens eine Öffnung (41) wenigstens eines der folgenden Merkmale aufweist:
- die Öffnung (41) ist eine Vertiefung,
- die Öffnung (41) ist ein Fenster,
- ein Teil der mindestens einen Öffnung (41) ist oberhalb der Stützhülse (17) angeordnet.

5. Steckfitting nach einem der Ansprüche 1 bis 4, **dadurch gekennzeichnet, dass** wenigstens zwei Öffnungen (41) im Wesentlichen konzentrisch und mit gleichen Abständen zueinander am Umfang der Steckhülse (40) angeordnet sind.

6. Steckfitting nach Anspruch 1, **dadurch gekennzeichnet, dass** die Steckhülse (40) drei Öffnungen (41) mit einer Ausdehnung der drei Öffnungen (41) in Umfangsrichtung der Steckhülse (40) zu jeweils ungefähr 5 % bis 15 %, vorzugsweise 10 % des Umfangs der Steckhülse (40) aufweist.

7. Steckfitting nach einem der Ansprüche 1 bis 6, **dadurch gekennzeichnet, dass** die Rückstellhalterung (32) eine Rückwand (31) aufweist, die beim Eingreifen in die mindestens eine Öffnung (41) zur axialen Fixierung des Klemmrings (30) und des Rohres (20) gegen eine äußere Öffnungswand (45a) der Öffnung (41) drückt.

8. Steckfitting nach einem der Ansprüche 1 bis 7, **dadurch gekennzeichnet, dass** das Klemmelement (30) mindestens einen kleinen Klemmsockel (34) aufweist, der dazu ausgebildet ist, vor dem Aufschieben des Rohres (20) auf die Stützhülse (17) das mindestens eine Klemmelement (30) an der Steckhülse (40) axial zu sichern, indem der kleine Klemmsockel (34) in die Öffnung (41) eingreift.

9. Steckfitting nach Anspruch 8, **dadurch gekennzeichnet, dass** die Steckhülse (40) einen Einführungsschlitz (46) korrespondierend zum mindestens einen kleinen Klemmsockel (34) aufweist.

10. Steckfitting nach einem der Ansprüche 1 bis 9, **dadurch gekennzeichnet, dass** das mindestens eine Klemmelement (30) an der inneren Auflagefläche (38) unterhalb der Rückstellhalterung (32) einen sich in Richtung des freien Endes (18a) aufweitenden Platzhalter (39) aufweist.

11. Steckfitting nach einem der Ansprüche 1 bis 10, **dadurch gekennzeichnet, dass** die Innenwand (43) der Steckhülse (40) mindestens zwei Abschnitte aufweist, wobei mindestens ein Abschnitt sich konisch in Richtung des freien Endes (18a) aufweitet.

12. Steckfitting nach einem der Ansprüche 1 bis 11, **dadurch gekennzeichnet, dass** die äußere Auflagefläche (35) des mindestens einen Klemmelements (30) mindestens zwei Abschnitte aufweist, wobei mindestens ein Abschnitt sich konisch in Richtung des freien Endes (18a) aufweitet.

13. Steckfitting nach einem der Ansprüche 1 bis 12, **dadurch gekennzeichnet, dass** zwischen der Innenwand (42) der Steckhülse (40) und der äußeren Auflagefläche (35) des mindestens einen Klemmelements (30) eine kleinere Reibung wirkt als zwischen der inneren Auflagefläche (38) des mindestens einen Klemmelements (30) und dem Rohr (20).

14. Steckfitting nach einem der Ansprüche 1 bis 13, **dadurch gekennzeichnet, dass** das mindestens eine Klemmelement (30) an der inneren Auflagefläche (38) eine separate oder integrierte Reib-/Haftschicht aufweist, die die Rohrhaltekräfte verstärkt.

15. Steckfitting nach einem der Ansprüche 1 bis 14, **dadurch gekennzeichnet, dass** das mindestens eine Klemmelement (30) Vertiefungen (50a, 50b) an seiner inneren Auflagefläche (38) und oder an seiner äußeren Auflagefläche (35) aufweist.
